# EUROPEAN PATENT APPLICATION

(11) **EP 4 507 345 A1**
(43) Date of publication of application: **12.02.2025**
(21) Application number: 22936202.5
(22) Date of filing: 08.04.2022
(51) Int. Cl.: H04W 4/50

(54) **WLAN SENSING MEASUREMENT METHOD, APPARATUS, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2022/085960
(87) International publication number: WO 2023/193265

(57) **Abstract**

The embodiments of the present disclosure relates to the technical field of mobile communications. Provided are a WLAN sensing measurement method, an apparatus, a electronic device and a storage medium, the WLAN sensing measurement method being applied to a sensing initiator, and the method comprising: transmitting a null data packet announcement (NDPA) frame, the NDPA frame carrying therein a first identifier of a transmitter and/or a second identifier of a receiver; and transmitting a first null data packet (NDP) frame, and instructing the transmitter to enable a second NDP frame to carry therein the second identifier and a third identifier of the initiator and to transmit the second NDP frame. Provided in the embodiments of the present disclosure is a format of the NDP frames participating in sensing measurement, so as to realize collaborative WLAN sensing measurement.

## Description

### TECHNICAL FIELD

The present disclosure relates to a field of mobile communication technologies, and particularly to a method and an apparatus for wireless local area network (WLAN) sensing measurement, an electronic device, and a storage medium.

### BACKGROUND

With the rapid development of mobile communication technologies, the wireless fidelity (Wi-Fi) technology has made great progress in transmission rate, throughput, etc. Currently, the research contents of the Wi-Fi technology include, for example, 320MHz bandwidth transmission, aggregation and collaboration of a plurality of frequency bands, etc. The main application scenarios include video transmission, augmented reality (AR), virtual reality (VR), etc.

In the Wi-Fi technology currently studied, wireless local area network (WLAN) sensing technology may be supported, for example, application scenarios such as location discovery, proximity detection, and presence detection in a dense environment (such as a home environment and an enterprise environment). A sensing measurement performed in a collaborative way exists in a WLAN sensing measurement. In the sensing measurement performed in a collaborative way, an access point (AP), as a sensing initiator, establishes a sensing measurement with a sensing responder. A station (STA), as a sensing transmitter, is supported to send a null data packet (NDP) frame involved in the sensing measurement to other STAs and APs involved in the sensing measurement. Thus, a format of the NDP frame involved in the sensing measurement may be provided for realizing the WLAN sensing measurement performed in a collaborative way.

### SUMMARY

Embodiments of the present disclosure provide a method and an apparatus for wireless local area network (WLAN) sensing measurement, an electronic device, and a storage medium, so as to provide a format of a NDP frame which is involved in a sensing measurement, to realize a WLAN sensing measurement performed in a collaborative way.

In an aspect of embodiments of the present disclosure, a method for wireless local area network (WLAN) sensing measurement, performed by a sensing initiator, is provided. The method includes:
sending a null data packet announcement (NDPA) frame, in which the NDPA frame includes a first identifier of a transmitter and/or a second identifier of a receiver; and
sending a first null data packet (NDP) frame, to indicate the transmitter to include the second identifier and a third identifier of the sensing initiator in a second NDP frame and send the second NDP frame.

In another aspect of embodiments of the present disclosure, a method for WLAN sensing measurement, performed by a sensing transmitter, is further provided. The method includes:
receiving an NDPA frame and a first NDP frame;
obtaining a second identifier of a receiver and/or a third identifier of an initiator included in the NDPA frame; and
sending a second NDP frame and including the second identifier and the third identifier in the second NDP frame.

In another aspect of embodiments of the present disclosure, a method for WLAN sensing measurement, performed by a sensing receiver, is further provided. The method includes:
receiving an NDPA frame and a first NDP frame sent by an initiator;
receiving a second NDP frame sent by a transmitter; and
sending a sensing measurement report frame to the initiator.

In another aspect of embodiments of the present disclosure, an electronic device is further provided. The electronic device is a sensing initiator The electronic device includes:
an NDPA sending module, configured to send an NDPA frame, in which the NDPA frame includes a first identifier of a transmitter and/or a second identifier of a receiver; and
a first NDP sending module, configured to send a first NDP frame to indicate the transmitter to include the second identifier and a third identifier of the sensing initiator in a second NDP frame and send the second NDP frame.

In another aspect of embodiments of the present disclosure, an electronic device is further provided. The electronic device is a sensing transmitter. The electronic device includes:
a first NDP receiving module, configured to receive an NDPA frame and a first NDP frame;
an obtaining module, configured to obtain a second identifier of a receiver and/or a third identifier of an initiator included in the NDPA frame; and
a second NDP sending module, configured to send a second NDP frame and include the second identifier and the third identifier in the second NDP frame.

In another aspect of embodiments of the present disclosure, an electronic device is further provided. The electronic device is a sensing receiver. The electronic device includes:
a third NDP receiving module, configured to receive an NDPA frame and a first NDP frame sent by an initiator;
a fourth NDP receiving module, configured to receive a second NDP frame sent by a transmitter; and
a measurement report sending module, configured to send a sensing measurement report frame to the initiator.

In another aspect of embodiments of the present disclosure, an apparatus for WLAN sensing measurement, applied to a sensing initiator, is further provided in an embodiment of the present disclosure. The apparatus includes:
an NDPA frame sending module, configured to send an NDPA frame, in which the NDPA frame includes a first identifier of a transmitter and/or a second identifier of a receiver; and
a first NDP frame sending module, configured to send a first NDP frame to indicate the transmitter to include the second identifier and a third identifier of the sensing initiator in a second NDP frame and send the second NDP frame.

In another aspect of embodiments of the present disclosure, an apparatus for WLAN sensing measurement, applied to a sensing transmitter, is further provided in an embodiment of the present disclosure. The apparatus includes:
a first NDP frame receiving module, configured to receive an NDPA frame and a first NDP frame;
an identifier obtaining module, configured to obtain a second identifier of a receiver and/or a third identifier of an initiator included in the NDPA frame; and
a second NDP frame sending module, configured to send a second NDP frame and include the second identifier and the third identifier in the second NDP frame.

In another aspect of embodiments of the present disclosure, an apparatus for WLAN sensing measurement, performed by a sensing receiver, is further provided in an embodiment of the present disclosure. The apparatus includes:
a third NDP frame receiving module, configured to receive an NDPA frame and a first NDP frame sent by an initiator;
a fourth NDP frame receiving module, configured to receive a second NDP frame sent by a transmitter; and
a measurement report frame sending module, configured to send a sensing measurement report frame to the initiator.

An electronic device is further provided in embodiments of the present disclosure. The electronic device includes a memory, a processor, and a computer program stored on the memory and executable on the processor, in which when the computer program is executed by the processor, the method according to one or more of the embodiments of the present disclosure is implemented.

A computer-readable storage medium is further provided in an embodiment of the present disclosure. The computer-readable storage medium has stored thereon a computer program that, when executed by a processor, the method according to one or more of the embodiments of the present disclosure is performed.

In embodiments of the present disclosure, the sensing initiator sends the NDPA frame, in which the NDPA frame includes the first identifier of the transmitter and/or the second identifier of the receiver, and sends the first NDP frame, to indicate the transmitter to include the second identifier and the third identifier of the sensing initiator in the second NDP frame and send the second NDP frame. The second NDP frame is involved in a sensing measurement and the second NDP frame includes the second identifier and the third identifier. Embodiments of the present disclosure provide a format of a NDP frame which is involved in a sensing measurement to realize a WLAN sensing measurement performed in a collaborative way.

Additional aspects and advantages of the embodiments of the disclosure may be partially given in the description below, which may become apparent from the description below, or will be learned through the practice of the disclosure.

### BRIEF DESCRIPTION OF THE DRAWINGS

In order to more clearly illustrate the technical solutions of embodiments of the disclosure, the drawings required for use in the description of the embodiments of the disclosure may be briefly introduced below. Obviously, the drawings in the following description are only some embodiments of the disclosure. For those skilled in the art, other drawings may be obtained based on these drawings without creative works.
FIG. 1 is a flowchart of a method for WLAN sensing measurement according to an embodiment of the present disclosure.
FIG. 2 is a schematic diagram of a first example according to an embodiment of the present disclosure.
FIG. 3 is a schematic diagram of the first example according to an embodiment of the present disclosure.
FIG. 4 is a schematic diagram of the first example according to an embodiment of the present disclosure.
FIG. 5 is a schematic diagram of a second example according to an embodiment of the present disclosure.
FIG. 6 is a schematic diagram of the second example according to an embodiment of the present disclosure.
FIG. 7 is a schematic diagram of a third example according to an embodiment of the present disclosure.
FIG. 8 is a schematic diagram of a third example according to an embodiment of the present disclosure.
FIG. 9 is a schematic diagram of a fourth example according to an embodiment of the present disclosure.
FIG. 10 is a schematic diagram of a fourth example according to an embodiment of the present disclosure.
FIG. 11 is a flowchart of a method for WLAN sensing measurement according to an embodiment of the present disclosure.
FIG. 12 is a flowchart of a method for WLAN sensing measurement according to an embodiment of the present disclosure.
FIG. 13 is a schematic diagram of an electronic device according to an embodiment of the present disclosure.
FIG. 14 is a schematic diagram of an electronic device according to an embodiment of the present disclosure.
FIG. 15 is a schematic diagram of an electronic device according to an embodiment of the present disclosure.
FIG. 16 is a schematic diagram of an electronic device according to an embodiment of the present disclosure.

### DETAILED DESCRIPTION

In the embodiments of the disclosure, the term "and/or" describes an association relationship of associated objects, indicating that three relationships may exist. For example, A and/or B may represent three situations: A exists alone, A and B exist at the same time, and B exists alone. The character "/" generally represents that the previous and next associated objects are in an "or" relationship.

The term "a plurality of" in the embodiments of the disclosure refers to two or more than two, and other quantifiers are similar thereto.

Reference will now be made in detail to exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all the implementations consistent with the present invention. Rather, they are merely examples of apparatus and methods consistent with some aspects of the present disclosure as recited in the appended claims.

The terms used in the disclosure are only for the purpose of describing particular embodiments and is not intended to limit the disclosure. As used in the disclosure and the appended claims, the singular forms "a/an" "said" and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used in the disclosure to describe various information, such information should not be limited to these terms. These terms are used only to distinguish information of the same type from one another. For example, without departing from the scope of the disclosure, first information may also be referred to as second information, and similarly, second information may also be referred to as first information. Depending on the context, for example, the word "if" as used herein may be interpreted as "when" or "in a case that " or "in response to determining that".

The technical solutions in the embodiments of the disclosure may be clearly and completely described below in conjunction with the drawings in the embodiments of the disclosure. Obviously, the described embodiments are only a part of the embodiments of the disclosure, not all of the embodiments. Based on the embodiments in the disclosure, all other embodiments obtained by those skilled in the art without making any creative works may fall within the scope of protection of the disclosure.

Embodiments of the disclosure provide a method and an apparatus for wireless local area network (WLAN) sensing measurement, an electronic device, and a storage medium, to provide a format of a null data packet (NDP) frame involved in a sensing measurement to realize a WLAN sensing measurement performed in a collaborative way.

The method and the apparatus are based on the same invention concept. Since the method and the apparatus solve the problem in a similar principle, the implementation of the apparatus and the method can refer to each other, and the repeated parts will not be repeated.

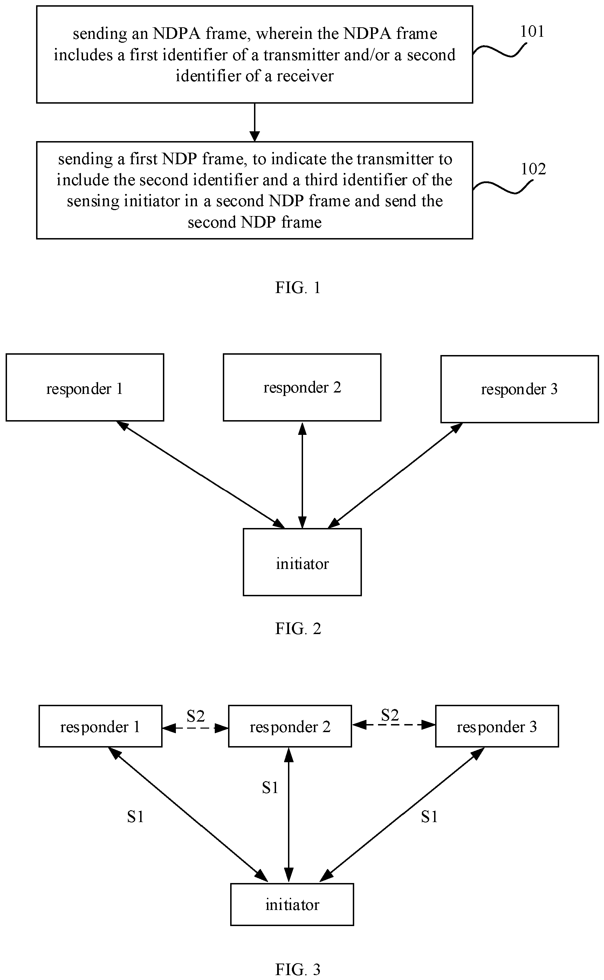

As shown in FIG. 1, embodiments of the present disclosure provide a method for WLAN sensing measurement. Optionally, the method is performed by an electronic device, in which the electronic device may be a sensing initiator. The method may include the following steps 101 to 102.

At step 101, a null data packet announcement (NDPA) frame is sent, in which the NDPA frame includes a first identifier of a transmitter and/or a second identifier of a receiver.

As a first example, referring to FIG. 2 to FIG. 4, a WLAN sensing architecture and a WLAN sensing procedure used in the method for WLAN sensing measurement according to embodiments of the disclosure are first introduced.

FIG. 2 illustrates an architecture diagram of a WLAN sensing procedure. A sensing initiator (or an initiator) initiates WLAN sensing measurement (for example, initiating a WLAN sensing session), and there may be a plurality of sensing responders (or sensing receivers) or responders that make a response, such as, responder 1, responder 2, and responder 3 shown in FIG. 2. When the sensing initiator initiates WLAN sensing, a plurality of associated or unassociated sensing responders for the WLAN sensing may make responses.

Referring to FIG. 3, the sensing initiator communicates with the sensing responders via a communication connection, such as the shown communication connection S1. The sensing responders communicate with each other via a communication connection S2.

Each sensing initiator may be a client. Each sensing responder (in this example, sensing responder 1 to sensing responder 3) may be a station (STA) or an access point (AP). In addition, the STA and the AP may take a plurality of roles in the WLAN sensing procedure. For example, in the WLAN sensing procedure, the STA may serve as a sensing initiator, and the sensing initiator may be a sensing transmitter, a sensing receiver, both the sensing transmitter and the sensing receiver, or neither the sensing transmitter nor the sensing receiver. In the WLAN sensing procedure, the sensing responder may be a sensing transmitter, a sensing receiver, or both the sensing transmitter and the sensing receiver.

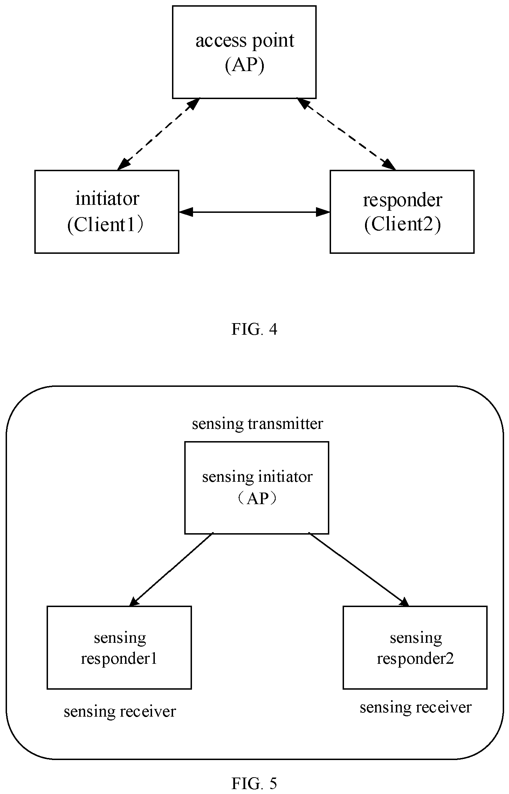

In another architecture, as shown in FIG. 4, both the sensing initiator and the sensing responder may be clients, and the sensing initiator and the sensing responder may communicate with each other by connecting to the same AP. In FIG. 4, client 1 is the sensing initiator, and client 2 is the sensing responder.

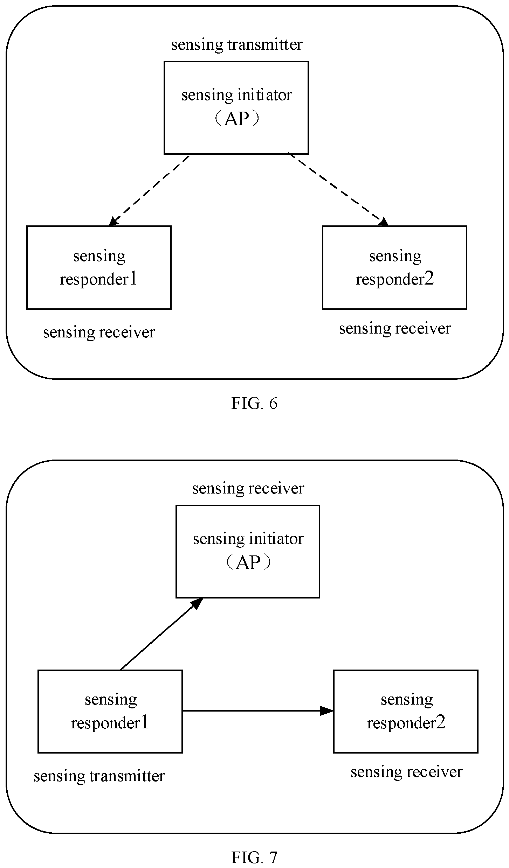

In a sensing measurement performed in a collaborative way, an AP, serving as a sensing initiator, establishes a sensing measurement with a sensing responder. And, an STA, serving as a sensing transmitter, can send an NDP frame involved in the sensing measurement to other STAs and APs involved in the sensing measurement. As a second example, referring to FIG. 5 and FIG. 6, a first example of the sensing measurement performed in a collaborative way is illustrated. A process of sending a measurement signal is illustrated in FIG. 5. The AP serving as a sensing initiator also serves as a sensing transmitter. The sensing initiator sends the signal, a sensing responder 1 and a sensing responder 2, which serve as receivers, receive the signal. Channels from the sensing initiator to the two sensing receivers are available. A process of returning a measurement result is illustrated in FIG. 6. The two sensing responders return the measurement results to the sensing initiator respectively.

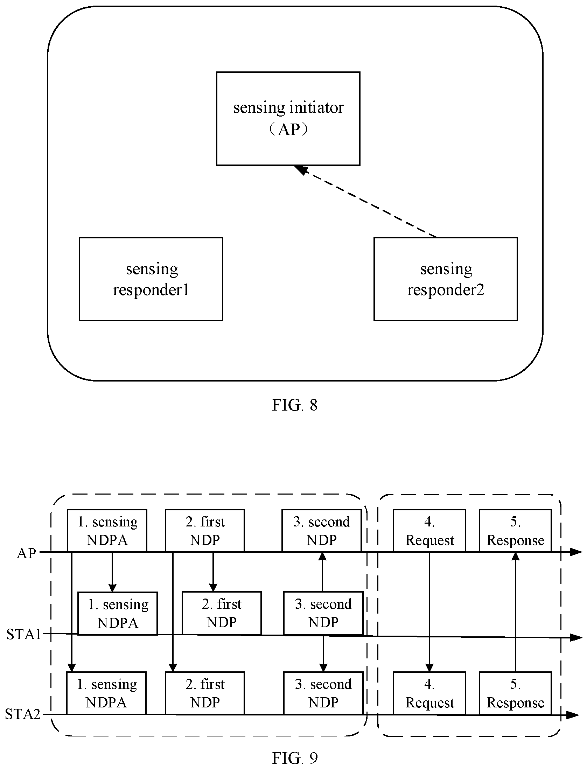

As a third example, referring to FIG. 7 and FIG. 8, a second example of the sensing measurement performed in a collaborative way is illustrated. A process of sending a measurement signal is illustrated in FIG. 7. A sensing responder 1, serving as a sensing transmitter, sends a signal. A sensing initiator and a sensing responder 2, serving as sensing receivers, receive the signal. A channel from the sensing responder 1 to the sensing initiator, and a channel from the sensing responder 1 to the sensing responder 2 are available. A process of returning a measurement result is illustrated in FIG. 8. The sensing responder 2 returns a measurement result to the sensing initiator.

In a sensing measurement performed in a collaborative way, the sensing initiator sends the NDPA frame, in which the NDPA frame includes the first identifier of the transmitter and/or the second identifier of the receiver. As shown in FIG. 5, the NDPA frame includes identifier information of the AP, the sensing responder 1 and the sensing responder 2.

At step 102, a first NDP frame is sent to indicate the transmitter to include the second identifier and a third identifier of the sensing initiator in a second NDP frame and send the second NDP frame.

After sending the NDPA frame, the sensing initiator sends a first NDP frame, in which a receiver of the first NDP frame includes a transmitter and a receiver. The first NDP frame indicates the transmitter to send the second NDP frame and include the second identifier of the receiver and the third identifier of the sensing initiator in the second NDP frame. Optionally, the first NDP frame is not involved in the sensing measurement.

As a fourth example, referring to FIG. 9, a WLAN sensing procedure for the method for WLAN sensing measurement provided in an embodiment of the present disclosure is illustrated. An AP is a sensing initiator, an STA1 is a sensing transmitter, and an STA2 is a sensing responder (a sensing receiver).

At step 1, the AP sends an NDPA frame to the STA1 and the STA2 respectively, in which the NDPA frame includes a first identifier of the STA1 and/or a second identifier of the STA2.

At step 2, the AP sends a first NDP frame to the STA1 and the STA2 respectively.

At step 3, the STA1 sends a second NDP frame to the AP and the STA2 respectively, in which the second NDP frame includes a second identifier of the STA2 and a third identifier of the AP.

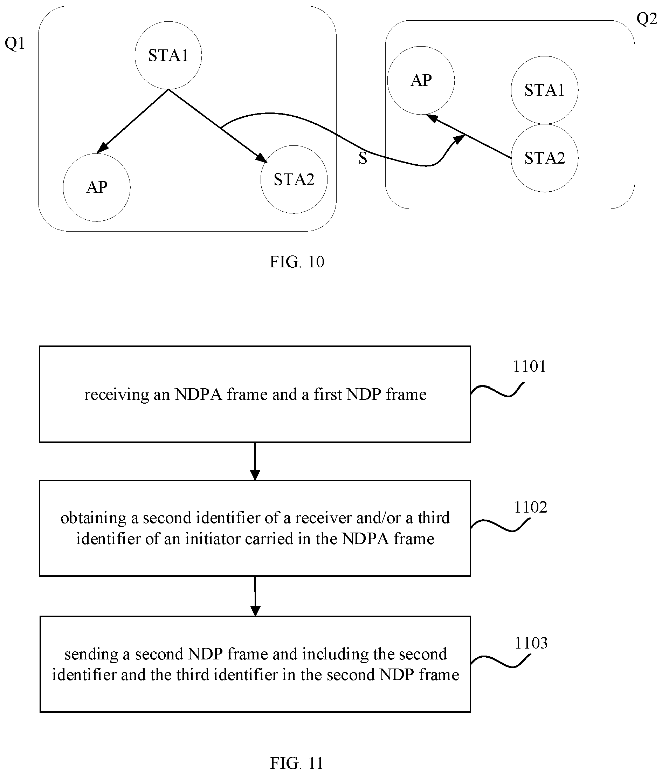

Referring to FIG. 10, a signal transmission scenario in step 3, in which the STA1 sends the signal to the AP and the STA2 respectively, is illustrated in Q1 in FIG. 10.

At step 4, the AP sends a request message (request), e.g., a sensing measurement request, etc., to the STA2.

At step 5, the STA2 returns a response message (response), e.g., a sensing measurement result, etc., to the AP.

Referring to FIG. 10, a signal transmission scenario in step 3, in which the STA2 sends a sensing measurement result directly to the AP, is illustrated in Q2 in FIG. 10. For a sensing measurement result of the STA 1, in general, the AP does not need an explicit sensing measurement report sent from the STA 1. If the AP needs an explicit sensing measurement report from the STA 1, the STA 1 may send a request to the STA 2 after the AP transmits the first NDP frame and the STA 2 returns the sensing measurement result of the STA 1 when the STA 2 returns the sensing measurement result of the STA 2. As shown by an arrow S in FIG. 10, the STA 1 sends the measurement result to the STA 2, and the STA 2 sends the measurement result to the AP.

In embodiments of the present disclosure, the sensing initiator sends the NDPA frame, in which the NDPA frame includes the first identifier of the transmitter and/or the second identifier of the receiver; and sends a first NDP frame, to indicate the transmitter to include the second identifier and the third identifier of the sensing initiator in the second NDP frame and send the second NDP frame. The second NDP frame is involved in a sensing measurement and the second NDP frame includes the second identifier and the third identifier. Embodiments of the present disclosure provide a format of a NDP frame involved in the sensing measurement to realize a WLAN sensing measurement performed in a collaborative way.

In an optional embodiment, sending the first NDP frame includes:
sending the first NDP frame to a device corresponding to the first identifier and/or a device corresponding to the second identifier. The device corresponding to the first identifier and/or the device corresponding to the second identifier is a receiver of the first NDP. As shown in the step 2 of FIG. 9, the AP sends the first NDP frame to the STA1 and the STA2 respectively.

In an optional embodiment, in which the NDPA frame includes a station information (STA info) field and/or a special STA info field.

The first identifier, the second identifier and/or the third identifier is included in the STA info field and/or the special STA info field. The first identifier serves as a transmitter address (TA) of the second NDP frame. The second identifier and/or the third identifier is a receiver address (RA) of the second NDP frame.

In an optional embodiment, after sending the first NDP frame, the method including:
receiving the second NDP frame; in which an RA of the second NDP frame includes address information of the sensing initiator and/or address information of the receiver; in which a TA of the second NDP frame includes address information of the transmitter. As shown in the step 3 of FIG. 9, the STA1 sends a second NDP frame to the AP and the STA2 respectively, in which the second NDP frame includes a second identifier of the STA2 and a third identifier of the AP.

In embodiments of the present disclosure, the sensing initiator sends the NDPA frame, in which the NDPA frame includes the first identifier of the transmitter and/or the second identifier of the receiver; and sends the first NDP frame, to indicate the transmitter to include the second identifier and the third identifier of the sensing initiator in a second NDP frame and send the second NDP frame. The second NDP frame is involved in the sensing measurement and the second NDP frame includes the second identifier and the third identifier. Embodiments of the present disclosure provide a format of a NDP frame involved in a sensing measurement to realize a WLAN sensing measurement performed in a collaborative way.

Referring to FIG. 11, embodiments of the present disclosure provide a method for WLAN sensing measurement. Optionally, the method is performed by an electronic device. The electronic device may be a sensing transmitter, in which the sensing transmitter may be an STA. The method may include the following steps 1101 to 1103.

At step 1101, an NDPA frame and a first NDP frame are received.

A WLAN sensing architecture and a WLAN sensing procedure in which the method for WLAN sensing measurement is applied may refer to the first example to the fourth example, which will not be repeated here.

In the sensing measurement performed in a collaborative way, an AP, serving as an initiator, establishes a sensing measurement with a sensing responder, and, an STA, serving as a transmitter, may send an NDP frame involved in a sensing measurement to other STAs and the AP involved in the sensing measurement. The initiator sends the NDPA frame, in which the NDPA frame includes a first identifier of a transmitter and/or a second identifier of a receiver. As shown in FIG. 5, the NDPA frame includes identifier information of the AP, the responder 1 and the responder 2. The transmitter may be an STA, and the STA receives the NDPA frame. After sending the NDPA frame, the initiator further sends the first NDP frame, in which the receiver of the first NDP frame include the transmitter and the receiver. The STA further receives the first NDP frame.

At step 1102, a second identifier of a receiver and/or a third identifier of an initiator included in the NDPA frame is obtained.

The second identifier of the receiver and/or the third identifier of the initiator is included in the NDPA frame. The transmitter obtains the second identifier and/or the third identifier of the initiator, in which the second identifier and/or the third identifier is an RA of the second NDP frame.

At step 1103, a second NDP frame is sent, and the second identifier and the third identifier are included in the second NDP frame as RAs of the second NDP frame.

In an optional embodiment, obtaining the second identifier of the receiver and/or the third identifier of the initiator included in the NDPA frame includes:
obtaining the second identifier and/or the third identifier included in an STA info field and/or a special STA info field of the NDPA frame. The AP includes the second identifier and/or the third identifier in the STA info field and/or the special STA info field, so that the transmitter can include the second identifier and the third identifier of the initiator in the second NDP.

In an optional embodiment, in which sending the second NDP frame includes:
sending the second NDP frame to the initiator and the receiver.

An RA of the second NDP frame includes address information of the initiator and/or address information of the receiver. A TA of the second NDP frame includes address information for receiving the second NDP frame. The TA of the second NDP frame includes address information of the transmitter, such as media access control (MAC) address information of the initiator. The address information may be included in the STA info field and/or the special STA info field.

In embodiments of the present disclosure, the transmitter receives the NDPA frame and the first NDP frame, obtains the second identifier of the receiver included in the NDPA frame and/or the third identifier of the initiator included in the NDPA frame. The transmitter sends the second NDP frame, in which the second NDP frame is involved in a sensing measurement, and the second NDP frame includes the second identifier and the third identifier. Embodiments of the present disclosure provide a format of a NDP frame which is involved in a sensing measurement to realize a WLAN sensing measurement performed in a collaborative way.

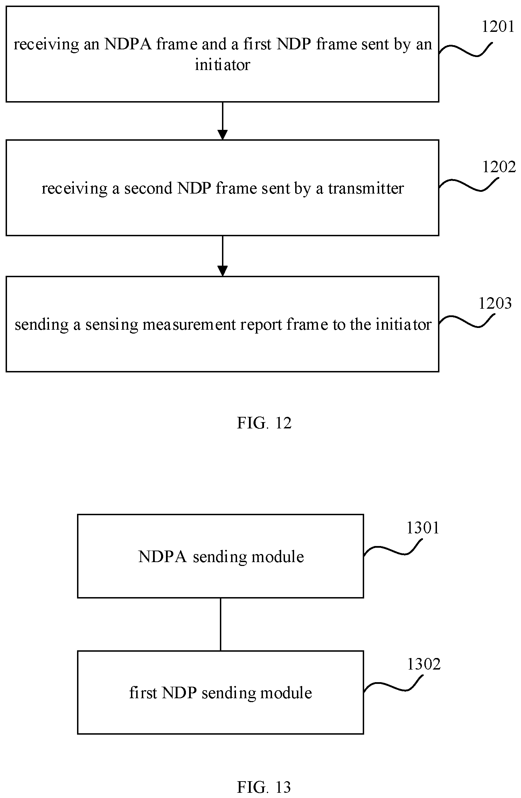

Referring to FIG. 12, embodiments of the present disclosure provide a method for WLAN sensing measurement. Optionally, the method is performed by an electronic device. The electronic device may be a sensing receiver, in which the sensing receiver may be an STA. The method may include the following steps 1201 to 1203.

At step 1201, an NDPA frame and a first NDP frame sent by an initiator is received.

A WLAN sensing architecture and a WLAN sensing procedure in which the method for WLAN sensing measurement is applied may refer to the first example, which will not be repeated here.

In the sensing measurement performed in a collaborative way, an AP, serving as an initiator, establishes a sensing measurement with a sensing responder, and, an STA, serving as a sensing transmitter, may send the NDP frame involved in the sensing measurement to other STAs and APs involved in a sensing measurement. The initiator sends the NDPA frame, in which the NDPA frame includes a first identifier of a transmitter and/or a second identifier of a receiver. As shown in FIG. 5, the NDPA frame includes identifier information of an AP, the sensing responder 1 and the sensing responder 2. The sensing transmitter may be an STA, and the STA receives the NDPA frame. After sending the NDPA frame, the initiator continues to send the first NDP frame, in which the receivers of the first NDP frame include the transmitter and the receiver, and the sensing receiver continues to receive the first NDP frame.

At step 1202, a second NDP frame sent by a transmitter is received.

After receiving the NDPA frame and the first NDP frame, the transmitter sends the second NDP frame. The second NDP frame is involved in the sensing measurement, and the second NDP frame includes the second identifier and the third identifier. As shown in the step 3 of FIG. 9, the STA1 sends a second NDP frame to the AP and the STA2 respectively, in which the second NDP frame includes a second identifier of the STA2 and a third identifier of the AP.

At step 1203, a sensing measurement report frame is sent to the initiator.

After completing the sensing measurement, the receiver returns the sensing measurement report frame to the initiator. As shown in the step 5 of FIG. 9, the STA2 returns a response message (response), e.g., a sensing measurement result, etc. to the AP.

In embodiments of the present disclosure, the receiver receives the NDPA frame and the first NDP frame sent by the initiator, receives the second NDP frame sent by the transmitter; and sends the sensing measurement report frame to the initiator. The second NDP frame is involved in the sensing measurement, and the second NDP frame includes the second identifier and the third identifier. Embodiments of the present disclosure provide a format of a NDP frame which is involved in a sensing measurement to realize a WLAN sensing measurement performed in a collaborative way.

Referring to FIG. 13, based on the same principle of the methods provided in embodiments of the present disclosure, embodiments of the present disclosure provide an electronic device, in which the electronic device may be a sensing initiator. The electronic device includes an NDPA sending module 1301 and a first NDP sending module 1302.

The NDPA sending module 1301 is configured to send an NDPA frame, in which the NDPA frame includes a first identifier of a transmitter and/or a second identifier of a receiver.

The first NDP sending module 1302 is configured to send a first NDP frame to indicate the transmitter to include the second identifier and a third identifier of the sensing initiator in a second NDP frame and send the second NDP frame.

Optionally, in an embodiment of the present disclosure, the first NDP sending module 1302 is configured to:
send the first NDP frame to a device corresponding to the first identifier and/or a device corresponding to the second identifier.

Optionally, in an embodiment of the present disclosure, the NDPA frame includes an STA info field and/or a special STA info field. The first identifier, the second identifier and/or the third identifier is included in the STA info field and/or the special STA info field.

Optionally, in an embodiment of the present disclosure, after sending the first NDP frame, the electronic device further includes an NDP frame receiving module.

The NDP frame receiving module is configured to receive the second NDP frame; in which an RA of the second NDP frame includes address information of the sensing initiator and/or address information of the receiver; in which a TA of the second NDP frame includes address information of the transmitter.

In embodiments of the present disclosure, the NDPA sending module 1301 sends the NDPA frame, in which the NDPA frame includes the first identifier of the transmitter and/or the second identifier of the receiver. The first NDP sending module 1302 sends the first NDP frame, to indicate the transmitter to include the second identifier and a third identifier of the sensing initiator in a second NDP frame and send the second NDP frame. The second NDP frame is involved in the sensing measurement, and the second NDP frame includes the second identifier and the third identifier.

Embodiments of the present disclosure provide an apparatus for WLAN sensing measurement, applied to a sensing initiator. The apparatus includes an NDPA frame sending module and a first NDP frame sending module.

The NDPA frame sending module is configured to send an NDPA frame, in which the NDPA frame includes a first identifier of a transmitter and/or a second identifier of a receiver.

The first NDP frame sending module is configured to send a first NDP frame to indicate the transmitter to include the second identifier and a third identifier of the sensing initiator in a second NDP frame and send the second NDP frame.

The apparatus also includes other modules of the electronic device in the aforementioned embodiments, which will not be described in detail here.

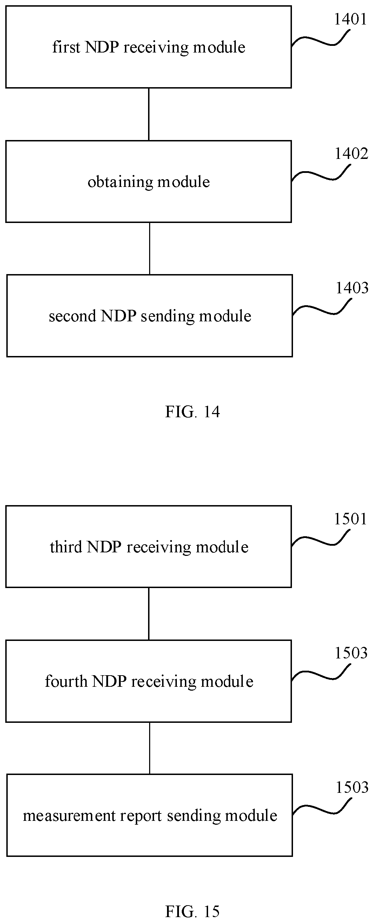

Referring to FIG. 14, based on the same principle of the methods provided in embodiments of the present disclosure, embodiments of the present disclosure provide an electronic device, in which the electronic device may be a sensing transmitter. The electronic device includes a first NDP receiving module 1401, an obtaining module 1402 and a second NDP sending module 1403.

The first NDP receiving module 1401 is configured to receive an NDPA frame and a first NDP frame.

The obtaining module 1402 is configured to: obtain a second identifier of a receiver and/or a third identifier of an initiator included in the NDPA frame.

The second NDP sending module 1403 is configured to send a second NDP frame and include the second identifier and the third identifier in the second NDP frame.

Optionally, in embodiments of the present disclosure, the obtaining module 1402 is configured to:
obtain the second identifier and/or the third identifier included in an STA info field and/or a special STA info field of the NDPA frame.

Optionally, in embodiments of the present disclosure, the second NDP sending module 1403 is configured to:
send the second NDP frame to the initiator and the receiver.

An RA of the second NDP frame includes address information of the initiator and/or address information of the receiver; in which a TA of the second NDP frame includes address information of the transmitter.

In embodiments of the present disclosure, the first NDP receiving module 1401 receives the NDPA frame and the first NDP frame. The obtaining module 1402 obtains the second identifier of the receiver and/or the third identifier of the initiator included in the NDPA frame. The second NDP sending module 1403 sends the second NDP frame, in which the second NDP frame is involved in a sensing measurement, and the second NDP frame includes the second identifier and the third identifier.

Embodiments of the present disclosure provide an apparatus for WLAN sensing measurement, applied to a sensing transmitter. The apparatus includes a first NDP frame receiving module, an identifier obtaining module, and a second NDP frame sending module.

The first NDP frame receiving module is configured to receive an NDPA frame and a first NDP frame.

The identifier obtaining module is configured to obtain a second identifier of a receiver and/or a third identifier of an initiator included in the NDPA frame.

The second NDP frame sending module is configured to send a second NDP frame and include the second identifier and the third identifier in the second NDP frame.

The apparatus also includes other modules of the electronic device in the aforementioned embodiments, which will not be described in detail here.

Referring to FIG. 15, based on the same principle of the methods provided in embodiments of the present disclosure, embodiments of the present disclosure provide an electronic device, in which the electronic device may be a sensing receiver,. The electronic device includes a third NDP receiving module 1501, a fourth NDP receiving module 1502 and a measurement report sending module 1503.

The third NDP receiving module 1501 is configured to receive an NDPA frame and a first NDP frame sent by an initiator.

The fourth NDP receiving module 1502 is configured to receive a second NDP frame sent by a transmitter.

The measurement report sending module 1503 is configured to send a sensing measurement report frame to the initiator.

In embodiments of the present disclosure, the third NDP receiving module 1501 receives the NDPA frame and the first NDP frame sent by the initiator. The fourth NDP receiving module 1502 receives the second NDP frame sent by the transmitter. The measurement report sending module 1503 sends the sensing measurement report frame to the initiator. The second NDP frame is involved in a sensing measurement, and the second NDP frame includes the second identifier and the third identifier.

Embodiments of the present disclosure provide an apparatus for WLAN sensing measurement, applied to a sensing receiver. The apparatus includes a third NDP frame receiving module, a fourth NDP frame receiving module, and a measurement report frame sending module.

The third NDP frame receiving module is configured to receive an NDPA frame and a first NDP frame sent by an initiator.

The fourth NDP frame receiving module is configured to receive a second NDP frame sent by a transmitter.

The measurement report frame sending module is configured to send a sensing measurement report frame to the initiator.

The apparatus also includes other modules of the electronic device in the aforementioned embodiments, which will not be described in detail here.

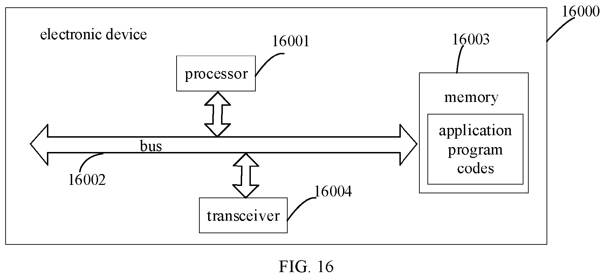

In an optional embodiment, embodiments of the disclosure further provide an electronic device. As shown in FIG. 16, the electronic device 16000 shown in FIG. 16 may be a server, including: a processor 16001 and a memory 16003. The processor 16001 and the memory 16003 are connected, for example, via a bus 16002. Optionally, the electronic device 16000 may further include a transceiver 16004. It should be noted that in actual applications, the transceiver 16004 is not limited to one, and the structure of the electronic device 16000 does not constitute a limitation on the embodiments of the disclosure.

The processor 16001 may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. The processor 16001 may implement or execute various exemplary logical blocks, modules, and circuits described in conjunction with the contents of the disclosure. The processor 16001 may also be a combination that implements computing functions, such as a combination of one or more microprocessors, a combination of a DSP and microprocessor, etc.

The bus 16002 may include a path to transmit information between the above components. The bus 16002 may be a peripheral component interconnect (PCI) bus or an extended industry standard architecture (EISA) bus, etc. The bus 16002 may be divided into an address bus, a data bus, a control bus, etc. For ease of representation, FIG. 16 illustrates only one thick line, but this does not mean that there is only one bus or one type of bus.

The memory 16003 may be a read only memory (ROM) or other types of static storage devices that may store static information and instructions, a random access memory (RAM) or other types of dynamic storage devices that may store information and instructions, or it may be an electrically erasable programmable read only memory (EEPROM), a compact disc read only memory (CD-ROM) or other optical disk storages, an optical disk storage (including a compressed optical disk, a laser disk, an optical disk, a digital versatile disk, a Blu-ray disk, etc.), a magnetic disk storage medium or other magnetic storage device, or any other medium that may be used to include or store the desired program codes in the form of instructions or data structures and accessible by a computer, but is not limited thereto.

The memory 16003 is configured to store application program codes for executing the solution of the disclosure, and the execution is controlled by the processor 16001. The processor 16001 is used to execute the application codes stored in the memory 16003 to implement the contents shown in the aforementioned method embodiments.

The electronic device includes but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc., and a fixed terminal such as a digital TV, a desktop computer, etc. The electronic device shown in FIG. 16 is merely an example and should not limit the functions and usage scope of the embodiments of the disclosure.

The server according to the disclosure may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content delivery networks (CDN), as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the disclosure.

Embodiments of the disclosure provide a computer-readable storage medium, on which a computer program is stored. When the computer program is run on a computer, the computer is enabled to execute the corresponding contents of the aforementioned method embodiments.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation for the execution of these steps and they may be executed in other orders. Moreover, at least part of the steps in the flowchart of the accompanying drawings may include a plurality of sub-steps or a plurality of stages. These sub-steps or stages are not necessarily executed at the same time, but may be executed at different times. The order of execution is not necessarily sequential, but may be executed in turn or alternately with other steps or at least part of the sub-steps or stages of other steps.

It should be noted that the above mentioned computer-readable medium in the disclosure may be a computer-readable signal medium or a computer-readable storage medium or any combination of the two. A computer readable storage medium may be, for example but not limited to, an electronic, magnetic, optical, electromagnetic, infrared, or semiconductor system, apparatus, or device, or any combination of the foregoing. The more specific examples of computer-readable storage media may include, but are not limited to, an electrical connection having one or more conductors, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the disclosure, a computer readable storage medium may be any tangible medium that can contain or store a program for use by or in connection with an instruction execution system, apparatus, or device. In the disclosure, a computer-readable signal medium may include a data signal propagated in a baseband or as a part of a carrier wave, in which computer-readable program codes are included. Such a propagated data signal may take a variety of forms, including but not limited to electromagnetic signals, optical signals, or any suitable combination of the foregoing. The computer-readable signal media may also be any computer-readable media other than computer-readable storage media, which may send, propagate or transport a program for use by or in conjunction with an instruction execution system, apparatus or device. The program code embodied on the computer readable medium may be transmitted using any appropriate medium, including but not limited to: a wire, an optical cable, a radio frequency (RF), etc., or any suitable combination of the foregoing.

The computer-readable medium may be included in the electronic device, or may exist independently without being incorporated into the electronic device.

The computer-readable medium includes one or more programs. When the one or more programs are executed by the electronic device, the electronic device executes the method shown in the above embodiments.

According to an aspect of the disclosure, there is provided a computer program product or a computer program, including computer instructions stored in a computer-readable storage medium. A processor of a computer device reads the computer instructions from the computer-readable storage medium and executes the computer instructions, to cause the computer device to perform the method in the above various optional implementations.

The computer program codes for performing operations of the disclosure may be written in one or more programming languages or their combination, including object-oriented programming languages such as Java, Smalltalk, C++, and conventional procedural programming languages such as "C" or similar programming languages. The program codes may be executed entirely on a user computer, partly on the user computer, as a stand-alone software package, partly on the user computer and partly on a remote computer, or entirely on the remote computer or server. In a case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possible implementation architectures, functions, and operations of systems, methods, and computer program products according to various embodiments of the disclosure. In this regard, each block in the flowchart or block diagram may represent a module, a program segment, or a portion of codes, which contains one or more executable instructions for implementing the specified logical functions. It should also be noted that, in some alternative implementations, the functions noted in the block may occur out of the order indicated in the figures. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules involved in the embodiments described in the disclosure may be implemented in software or hardware. The name of a module does not, in some cases, constitute a limitation on the module itself. For example, module A may also be described as "module A for performing operation B".

The above description is only preferred embodiments of the disclosure and an illustration of the technical principles used. Those skilled in the art should understand that the scope of disclosure involved in the disclosure is not limited to the technical solutions formed by a specific combination of the above-mentioned technical features, but should also cover other technical solutions formed by any combination of the above-mentioned technical features or their equivalent features without departing from the above-mentioned concepts of the disclosure. For example, the above-mentioned features are replaced with the technical features with similar functions disclosed in this disclosure (but not limited to) to form a technical solution.

## Claims

1. A method for wireless local area network (WLAN) sensing measurement, performed by a sensing initiator, comprising:
sending a null data packet announcement (NDPA) frame, wherein the NDPA frame comprises a first identifier of a transmitter and/or a second identifier of a receiver; and
sending a first null data packet (NDP) frame, to indicate the transmitter to include the second identifier and a third identifier of the sensing initiator in a second NDP frame and send the second NDP frame.

2. The method according to claim 1, wherein sending the first NDP frame comprises:
sending the first NDP frame to a device corresponding to the first identifier and/or a device corresponding to the second identifier.

3. The method according to claim 1, wherein the NDPA frame comprises a station information (STA info) field and/or a special STA info field; and
the first identifier, the second identifier and/or the third identifier is included in the STA info field and/or the special STA info field.

4. The method according to claim 1, wherein after sending the first NDP frame, the method comprises:
receiving the second NDP frame; wherein a receiver address (RA) of the second NDP frame comprises address information of the sensing initiator and/or address information of the receiver; wherein a transmitter address (TA) of the second NDP frame comprises address information of the transmitter.

5. A method for wireless local area network (WLAN) sensing measurement, performed by a sensing transmitter, comprising:
receiving a null data packet announcement (NDPA) frame and a first null data packet (NDP) frame;
obtaining a second identifier of a receiver and/or a third identifier of an initiator included in the NDPA frame; and
sending a second NDP frame and including the second identifier and the third identifier in the second NDP frame.

6. The method according to claim 5, wherein obtaining the second identifier of the receiver and/or the third identifier of the initiator included in the NDPA frame comprises:
obtaining the second identifier and/or the third identifier included in a station information (STA info) field and/or a special STA info field of the NDPA frame.

7. The method according to claim 5, wherein sending the second NDP frame comprises:
sending the second NDP frame to the initiator and the receiver;
wherein a receiver address (RA) of the second NDP frame comprises address information of the initiator and/or address information of the receiver; wherein a transmitter address (TA) of the second NDP frame comprises address information of the transmitter.

8. A method for wireless local area network (WLAN) sensing measurement, performed by a sensing receiver, comprising:
receiving a null data packet announcement (NDPA) frame and a first null data packet (NDP) frame sent by an initiator;
receiving a second NDP frame sent by a transmitter; and
sending a sensing measurement report frame to the initiator.

9. An electronic device, wherein the electronic device is a sensing initiator, the electronic device comprising:
a null data packet announcement (NDPA) sending module, configured to send an NDPA frame, wherein the NDPA frame comprises a first identifier of a transmitter and/or a second identifier of a receiver; and
a first null data packet (NDP) sending module, configured to send a first NDP frame to indicate the transmitter to include the second identifier and a third identifier of the sensing initiator in a second NDP frame and send the second NDP frame.

10. An electronic device, wherein the electronic device is a sensing transmitter, the electronic device comprising:
a first null data packet (NDP) receiving module, configured to receive a null data packet announcement (NDPA) frame and a first NDP frame;
an obtaining module, configured to obtain a second identifier of a receiver and/or a third identifier of an initiator included in the NDPA frame; and
a second NDP sending module, configured to send a second NDP frame and include the second identifier and the third identifier in the second NDP frame.

11. An electronic device, wherein the electronic device is a sensing receiver, the electronic device comprising:
a third null data packet (NDP) receiving module, configured to receive a null data packet announcement (NDPA) frame and a first NDP frame sent by an initiator;
a fourth NDP receiving module, configured to receive a second NDP frame sent by a transmitter; and
a measurement report sending module, configured to send a sensing measurement report frame to the initiator.

12. An apparatus for wireless local area network (WLAN) sensing measurement, applied to a sensing initiator, comprising:
a null data packet announcement (NDPA) frame sending module, configured to send an NDPA frame, wherein the NDPA frame comprises a first identifier of a transmitter and/or a second identifier of a receiver; and
a first null data packet (NDP) frame sending module, configured to send a first NDP frame to indicate the transmitter to include the second identifier and a third identifier of the sensing initiator in a second NDP frame and send the second NDP frame.

13. An apparatus for wireless local area network (WLAN) sensing measurement, applied to a sensing transmitter, comprising:
a first null data packet (NDP) frame receiving module, configured to receive a null data packet announcement (NDPA) frame and a first NDP frame;
an identifier obtaining module, configured to obtain a second identifier of a receiver and/or a third identifier of an initiator included in the NDPA frame; and
a second NDP frame sending module, configured to send a second NDP frame and include the second identifier and the third identifier in the second NDP frame.

14. An apparatus for wireless local area network (WLAN) sensing measurement, applied to a sensing receiver, comprising:
a third null data packet (NDP) frame receiving module, configured to receive a null data packet announcement (NDPA) frame and a first NDP frame sent by an initiator;
a fourth NDP frame receiving module, configured to receive a second NDP frame sent by a transmitter; and
a measurement report frame sending module, configured to send a sensing measurement report frame to the initiator.

15. An electronic device, comprising: a memory, a processor, and a computer program stored on the memory and executable on the processor, wherein when the computer program is executed by the processor, the method according to any one of claims 1 to 8 is implemented.

16. A computer-readable storage medium having stored thereon a computer program that, when executed by a processor, implements the method according to any one of claims 1 to 8.
